# EUROPEAN PATENT APPLICATION

(11) **EP 1 724 778 A1**
(43) Date of publication of application: **22.11.2006**
(21) Application number: 05010786.1
(22) Date of filing: 18.05.2005
(51) Int. Cl.: G11B 23/40, B41J 3/407, G06K 1/12

(54) **Method for writing a rewritable label of an optical storage media**

(71) Applicant: M.E.T. Technology Co., Ltd., Taipei, 114 (TW)
(72) Inventor: Ping, Wei Wen, Taipei, 114 (TW)
(74) Representative: Kador & Partner

(57) **Abstract**

A method for labeling rewritable optical storage media, in which method a CD label comprising a reversible heat-sensitive material is disclosed. When a computer is not used, software is adopted, while alternatively when a computer is used, firmware is adopted. An optical reading device is used to read file-related information, such as filenames, from CDs. Afterwards, a heat treatment is employed to delete and rewrite to or to write directly to the labels of the CDs. Furthermore, during the process of burning CDs, the step of flipping the CDs is not necessary to write directly to the labels of the CDs.

## Description

### FIELD OF THE INVENTION

The present invention relates generally to a method for labeling rewritable optical media, more particularly to a method for writing labels of optical storage media, which utilizes software and heat treatments to proceed with rewriting.

### BACKGROUND OF THE INVENTION

Presently the time has developed into a digital era, therefore the information, catalogs, or multimedia effects used in, for example, advertisements can be burned and stored in empty optical storage media such as a compact disk (CD) via computers. However, if empty CDs are not labeled, different CD data tends to mix up, which make management and preservation of the CDs difficult. Accordingly, some people mark by hand using a special-purpose pen directly on the CDs, others stick labels printed by computers to the CDs. Currently, a printer, which allows a user to draw burned CDs out of a CD burner and reinstall it into the printer for, particularly, printing directly on the CD, is developed. Nevertheless, in such a disposal, the CD burner and the printer are independently located in two places, the CD has to be firstly drawn out of the CD burner, then to be moved and placed into the printer. The extra time to move between the CD burner and the printer elongates the time required to finish burning the CD. Moreover, because burning and labeling are handled separately, it is possible to cause disorder, which in turn would result in occurrence of printing errors. In prior-art technologies, the CD as disclosed in Taiwan Patent No. 467114, entitled "Structure of Label-Sticking Devices for Compact Disks", has to be removed from a CD burner before utilizing a printer and a label-sticking device because the label of the CD is made separately. Related technologies are referred to Taiwan Patent No. 374484, No. 312609, as well as No. 509207.

In addition, there are still technologies for combining burning and printing, such as the technology disclosed in Taiwan Patent No. 578687, entitled "Label Printer Capable of Burning Compact Disks". In which patent, the functions of burning a CD and of printing a CD label are integrated. Although it is no longer necessary to handle processes separately, printing errors cannot be recovered.

Moreover, a reversible heat-sensitive recording material is disclosed in Taiwan Patent No. 590907 and No. 586090, such as the reversible heat-sensitive recording material installed on a carrier and formed by the heat-sensitive layer composed of temperature-dependent and reversible-transparency organic molecule-based materials as well as of resins, or the reversible heat-sensitive recording material installed on a carrier and formed by a heat-sensitive color-phosphor layer containing dye precursors and reversible developers. The improvement of a contactless rewritable heat label disclosed in Taiwan Patent No. 586090 comprises depositing from the base-layer side sequentially a bottom-spreading layer formed by crosslinking resins, a heat-sensitive color-phosphor layer, and a light-absorbing heat-exchange layer. It also includes disposing an adhesive layer such that information can be recorded and deleted by contactless means, wherein the crosslinking resins of the bottom-spreading layer are provided with over 30% crosslinking gel content, and the heat-sensitive color-phosphor layer contains dye precursors and reversible developers. In addition, the improvement of heat-reversible recording media disclosed in Taiwan Patent No. 590907 comprises resins, organic molecule-based compounds, and at least a heat-sensitive layer with transparency changing reversibly according to temperatures, wherein glass transition temperature of the heat-sensitive layer changes between -10°C and 5°C, and its transparency temperature width is over 30°C.

Consequently, the present invention makes use of such a reversible heat-sensitive material on CDs to provide the CDs with rewritable CD labeling layer, as well as to print on the labeling layer in accordance with the file information in the CDs. Also, the present invention can be used in CD burners such that separate processes are no longer necessary in order to solve said problems.

### SUMMARY

The main purpose of the present invention is to provide a method for labeling rewritable optical storage media, in which method an optical reading device is used to read information in a CD. Then the information is printed to a label comprising a reversible heat-sensitive material via software, such that rewritable function is provided. In addition, a CD burner can be integrated without the need of handling processes separately once burning is required.

The secondary purpose of the present invention is to provide a method for labeling rewritable optical storage media, in which method firmware is provided such that a computer is not needed. Instead, the information in the CD can be read directly via the firmware in order to print on the label comprising the reversible heat-sensitive material, such that rewritable function is provided.

In order to achieve said purposes and effects, the present invention provides a method for labeling rewritable optical storage media, in which method a CD label comprising a reversible heat-sensitive material is disclosed. When a computer is not used, software is adopted, while alternatively when a computer is used, firmware is adopted. An optical reading device is used to read file-related information, such as filenames, from CDs. Afterwards, a heat treatment is employed to delete and rewrite to or to write directly to the labels of the CDs. Furthermore, during the process of burning CDs, the step of flipping the CDs is not necessary to write directly to the labels of the CDs.

### BRIEF DESCRIPTION OF THE DRAWINGS

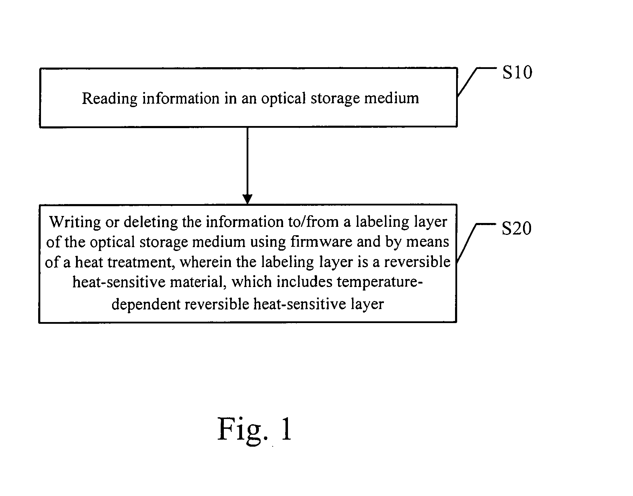

Figure 1 shows the method for labeling rewritable optical storage media according to the present invention.

### DETAILED DESCRIPTION

In order to make the structure, characteristics, and effectiveness achieved by the present invention to be further understood and recognized, the preferred embodiment and accompanying detailed descriptions are described as follows.

There are technologies of printing CD labels in prior art. However, a printer is needed for printing, and then the printed label has to be adhered to the surface of a CD separately. In addition, another technology is able to combine the technologies of burning CD and of printing CD labels. Nevertheless, once an error occurred during printing, it would not be possible to recover. Accordingly, the present invention makes use of the reversible heat-sensitive material in prior art to CD labels, to provide the labels with a rewritable function. Because said reversible heat-sensitive material is prior art, and its related technologies are not the focus of the present invention, they are not discussed any further. It is referred to Taiwan Patent No. 590907 for the details.

First, deleting or writing a CD label is described. When the CD label is provided with a reversible heat-sensible material, wherein the reversible heat-sensible material contains a reversible heat-sensible layer and a protection layer, a magnetic head can be used to read the information in the reversible heat-sensible layer, and a heating head can be used to proceed with heating in order to delete the information in the reversible heat-sensible layer, and still a heat-sensitive head together with said heating head can be further used to carry out a heat treatment in order to proceed with writing information into the reversible heat-sensible layer. Because the technology of writing or deleting is not the focus of the present invention, it is not described here.

Referring to Figure 1, it shows a method for labeling rewritable optical storage media. The main steps comprises:
Step S 10, reading information in an optical storage media; and Step S20, writing or deleting the information to/from a labeling layer of the optical storage media using firmware and by means of a heat treatment, wherein the labeling layer is a reversible heat-sensitive material, which includes a temperature-dependent reversible heat-sensitive layer.

The writing or deleting technology mentioned in the step S20 is as described above in the present invention. In addition, the information in the optical storage media can be file-related information, such as filenames.

Furthermore, firmware is adopted in the step S20, which comprises software and a memory. If a computer is not used, the firmware is used to accomplish writing to or deleting from CD labels. Alternatively, if a computer is used, software can be applied in the step S20 to accomplish writing to or deleting from CD labels. It depends on whether a computer is used or not.

Moreover, the present invention can make use of a CD burner or of merely a general CD player. When a CD burner is used, the processes of burning CDs and writing to or deleting from CD labels can be done at the same time. Because a computer can be chosen to be used or not during burning process in CD burners, the present invention can be developed accordingly in order to accomplish the process of writing to or deleting from CD labels, wherein the CDs can comply with any of the following specifications: CD, CD-R, CD-RW, DVD, DVD-R, DVD-RW, DVD+R, DVD+RW, DVD-RAM.

In summary, the present invention makes use of the reversible heat-sensitive material in the CD labels. In addition, the present invention writes or deletes CD information to/from the CD labels directly by making use of a CD player or a CD burner via firmware or software, such that an additional device for printing the CD labels or the process of removing the CD is not necessary.

The present invention conforms to the legal requirements owing to its novelty, unobviousness, and utility. However, the foregoing description of embodiment is only a preferred embodiment of the present invention, not used to limit the scope and range of the present invention. Those equivalent changes or modifications made according to the shape, structure, feature, or spirit described in the claims of the present invention are included in the appended claims of the present invention.

## Claims

1. A method for labeling a rewritable optical storage medium, comprising the steps of:
reading information in an optical storage medium; and writing or deleting the information to/from a labeling layer of the optical storage medium using firmware and
by means of a heat treatment, wherein the labeling layer is a reversible heat-sensitive material, which includes temperature-dependent reversible heat-sensitive layer.

2. The method of Claim 1, wherein the information is read directly by an optical reading device.

3. The method of Claim 1, wherein the information is a file list in the optical storage medium.

4. The method of Claim 3, wherein the file list is at least one filename.

5. The method of Claim 1, wherein the firmware comprises software and a memory.

6. A method for labeling a rewritable optical storage medium, comprising the steps of:
reading information in an optical storage medium; and writing or deleting the information to/from a labeling layer of the optical storage medium using software and
by means of a heat treatment, wherein the labeling layer is a reversible heat-sensitive material, which includes temperature-dependent reversible heat-sensitive layer.

7. The method of Claim 6, wherein the information is read directly by an optical reading device.

8. The method of Claim 6, wherein the information is a file list in the optical storage medium.

9. The method of Claim 8, wherein the file list is at least one filename.
